# EUROPÄISCHE PATENTSCHRIFT

(11) **EP 3 544 776 B1**
(45) Veröffentlichungstag und Bekanntmachung des Hinweises auf die Patenterteilung: **01.07.2020**
(21) Anmeldenummer: 17811190.2
(22) Anmeldetag: 21.11.2017
(51) Int. Cl.: B26D 11/00

(54) **SCHNEIDVORRICHTUNG ZUM KAPPEN EINES SCHLEPPSONARS UND DAZUGEHÖRIGES VERFAHREN**
CUTTING DEVICE AND METHOD FOR CUTTING THE CABLE OF A TOWING ARRAY SONAR AND
DISPOSITIF ET PROCÉDÉ POUR LA COUPE D'UN CABLE D'UN SONAR REMORQUÉ

(30) Priorität: 24.11.2016 DE 102016122679
(43) Veröffentlichungstag der Anmeldung: 02.10.2019
(73) Patentinhaber: ATLAS ELEKTRONIK GmbH, 28309 Bremen (DE)
(72) Erfinder: BAUER, Wilhelm, 27711 Osterholz-Scharmbeck (DE); KRISTANN, Andreas, 28307 Bremen (DE)
(74) Vertreter: thyssenkrupp Intellectual Property GmbH
(86) Internationale Anmeldenummer: PCT/DE2017/101004
(87) Internationale Veröffentlichungsnummer: WO 2018/095485

(56) Entgegenhaltungen:
- WO-A1-2011/062504
- WO-A1-2015/080154
- WO-A1-2017/013205
- DE-A1- 2 352 700
- US-B1- 8 087 372

## Beschreibung

Die Erfindung bezieht sich auf ein System, das eine Schneidvorrichtung zum Kappen eines Schleppsonars in einem Notfall umfasst.

Schleppsonare werden zum Empfang von Unterwassersignalen - vorzugsweise akustischen Signalen - eingesetzt, um Objekte im Wasser zu erfassen, zum Beispiel Überwasserschiffe oder U-Boote. Bei diesen Schleppsonaren handelt es sich gewöhnlich um längliche, zylinderförmige Schläuche, die Elektronik zum Empfang der Unterwassersignale enthalten, und mit Öl befüllt sind. Diese Signalempfangseinheiten sind gewöhnlich in vorbestimmten Abständen angebracht, wobei die Distanz zwischen den Empfangseinheiten vom gewünschten Frequenzbereich abhängig ist. Je geringer die Distanz, desto höher ist die Frequenz, die erfasst werden kann. U-Boote müssen vorzugsweise einen niedrigeren Frequenzbereich abdecken, was zu größeren Distanzen zwischen den Signalempfangseinheiten des Schleppsonars führt. Mehrere einzelne Komponenten können mittels Kupplungselementen zusammengekuppelt werden, um eine einzige große Anordnung auszubilden, wobei die Kupplungselemente aus einem oder mehreren Teilen bestehen können, die miteinander verbunden werden können. Durch das Verbinden mehrerer Abschnitte wird die Wartung erleichtert und beschädigte Abschnitte können mit geringem Aufwand ausgetauscht werden.

Im Falle einer unvorhergesehenen Situation, durch die das Schleppsonar nicht eingeholt werden kann - zum Beispiel wenn das Schleppsonar an einem Unterwasserobjekt stecken bleibt und das Schiff daher nicht fortbewegt werden kann - ist es notwendig, über ein Notfallverfahren zu verfügen. Dieses Notfallverfahren kann darin bestehen, das Schleppsonar zu kappen, um das U-Boot von dem Schleppsonar und vom Unfallort zu lösen. Dabei muss berücksichtigt werden, dass ein erhöhter Kraftaufwand angewendet werden muss, falls das durchzuschneidende Teil des Schleppsonars ein Kupplungselement, vorzugsweise ein massives Metallelement oder möglicherweise auch eine Signalempfangseinheit umfasst. Ein geringerer Kraftaufwand ist erforderlich, wenn nur der ölgefüllte Schlauch - vorzugsweise aus Elastomermaterial gefertigt - durchschnitten werden muss. Schneidgeräte zum Kappen eines Schleppsonars, von Kabeln und dergleichen sind z. B. schon aus Cobham Life Support, St. Petersburg, Florida, USA, bekannt. Diese Geräte umfassen eine einzige Schneideinheit, bei der ein Schleppsonar oder dergleichen durch die Schneideinheit geführt und eine Schneidklinge durch eine Explosion aktiviert wird. Die Explosion wird in lineare Bewegung übertragen, durch welche die Schneidklinge verlagert wird. Ein Vorteil einer solchen durch Explosion aktivierten Schneidklinge besteht darin, dass auch massive Kupplungselemente mit dem Gerät gekappt werden können, da es eine starke Kraft auf das Kabel ausübt. Ein Nachteil ist jedoch, dass durch die Explosion Lärm emittiert wird. Dies ist ungünstig, wenn es in einem U-Boot angewendet wird, bei dem Geräuschlosigkeit - und damit das Verbergen vor einem potenziellen Feind - ein wichtiger Parameter ist.

Im Hinblick auf das Vorstehende ist es daher ein Ziel der vorliegenden Erfindung, eine Schneidvorrichtung bereitzustellen, welche in der Lage ist, ein Schleppsonar auf zuverlässige Weise lautlos zu kappen.

DE 2 352 700 A1 offenbart eine Vorrichtung gemäss Oberbegriff von Anspruch 1.

Dieses Ziel wird durch die Bereitstellung einer Schneidvorrichtung nach Anspruch 1 und eines Schneidverfahrens nach Anspruch 7 erreicht, d. h. eine Schneidvorrichtung umfassend zwei Schneidgeräte zum Kappen des Schleppsonars. Die Schneidgeräte versuchen dabei, die Anordnung nacheinander zu kappen. Nachdem das erste Schneidgerät das Kappen des Schleppsonars beendet hat, wird ermittelt, ob der Schneidvorgang erfolgreich war. Wenn das erste Schneidgerät während des Kappens stecken bliebe und der Schneidvorgang nicht abgeschlossen wurde, wird das zweite Schneidgerät zum Kappen des Schleppsonars aktiviert.

Die Schneidgeräte werden in einer vorbestimmten Distanz voneinander angeordnet und umfassen ein oder mehrere Vorrichtungen zum Trennen des Schleppsonars in mehrere Teile. Dies kann zum Beispiel mit Laserlicht, einer starken Wärmequelle, rotierenden Messern, Klingen oder dergleichen erzielt werden.

In einer bevorzugten Ausführung der Erfindung ist jedes der Schneidgeräte als Schneidklinge ausgeführt. Da die auf das Schleppsonar angewendete Kraft nicht stark genug ist, um undurchtrennbare Abschnitte zu kappen, d. h. Abschnitte, die nicht mit den Schneidklingen gekappt werden können, zum Beispiel Kupplungselemente oder möglicherweise Signalempfangseinheiten, muss der Schneidvorgang in einer bestimmten Reihenfolge erfolgen. Zuerst wird versucht, das Schleppsonar mittels der ersten Schneidklinge zu kappen. Falls das Schleppsonar nicht erfolgreich gekappt wurde, wird die zweite Schneidklinge aktiviert, um zu gewährleisten, dass das Schleppsonar gekappt wird. Darüber hinaus ist das Material der Schneidklingen nichtmagnetisch, wodurch die Ortsbestimmung des Schiffs verhindert wird. Vorzugsweise sind sämtliche Teile der Schneidvorrichtung aus korrosionsbeständigem, nichtmagnetischem Material.

In einer bevorzugten Ausführung der Erfindung ist das Material der Schneidklingen entweder korrosionsbeständig - zum Beispiel Bronze - oder die Schneidklingen sind in eine Flüssigkeit - vorzugsweise Öl - eingebettet, um Korrosion zu verhindern. Im letzteren Fall ist die Schneidklinge in einem Gehäuse angeordnet, welches mit Dichtungen, wie O-Ringen oder Versiegelungen, verschlossen ist. Eine dieser Versiegelungen kann zerstört werden, wenn die Schneidklinge zum Kappen des Schleppsonars durch die Versiegelung hindurch verschoben wird. Eine korrosionsbeständige Schneidklinge ist notwendig, da sich die Schneidvorrichtung vorzugsweise außerhalb des Hüllkörpers eines U-Boots befindet, das in Meerwasser schwimmt. Wenn die Schneidklingen korrodiert wären, könnten sie möglicherweise nicht ihre Aufgabe des Kappens des Schleppsonars erfolgreich erfüllen. Selbstverständlich sind andere Varianten, um die Schneidklingen korrosionsbeständig zu machen, anwendbar.

Erfindungsgemäss umfasst die Schneidvorrichtung eine oder mehrere Sensoreinrichtungen, vorzugsweise als Näherungssensoren konfiguriert, welche die Position der Schneidklingen ermitteln und gemäß den erfassten Daten ein Signal erzeugen. Die Informationen werden für eine Bedieneinheit bereitgestellt und einem Anwender oder Bediener zum Beispiel mit einer Lampe, einem Ton oder durch Anzeige der Daten oder Symbole gemäß den Daten verfügbar gemacht. Der Bediener kann so den Fortschritt des Kappens beobachten, was ihm hilft, Entscheidungen in Bezug auf die weiteren Verfahrensschritte zu treffen. Darüber hinaus können die Schneidgeräte durch einen Bediener mit der Bedieneinheit entweder manuell oder automatisch als voreingestelltes Verfahren aktiviert werden. Dadurch kann die Bedieneinheit zum Beispiel aufgrund der Informationen der Sensoreinrichtungen das zweite Schneidgerät aktivieren.

In einer bevorzugten Ausführung der Erfindung werden die Schneidklingen durch Hydraulikzylinder aktiviert, um einen lautlosen Schneidvorgang zu gewährleisten.

In einer bevorzugten Ausführung der Erfindung umfasst das System ein Schleppsonar mit undurchtrennbaren Abschnitten. Bei diesen undurchtrennbaren Abschnitten kann es sich zum Beispiel um Kupplungselemente zum Verbinden zweier Segmente handeln und/oder um Signalempfangseinheiten zum Empfangen von Unterwassersignalen, bei denen es sich vorzugsweise um akustische Signale handelt. Solche Elemente umfassen vorzugsweise massive Metallkomponenten oder Komponenten aus anderen starren Materialien, die nicht von den Schneidklingen gekappt werden können.

In einer bevorzugten Ausführung der Erfindung wird die Distanz zwischen dem ersten und dem zweiten Schneidgerät derart gewählt, dass das Schleppsonar von mindestens einem der Schneidgeräte erfolgreich gekappt werden kann. Daher kann höchstens eines der Schneidgeräte auf einen undurchtrennbaren Abschnitt treffen.

In einer anderen bevorzugten Ausführung der Erfindung wird die Distanz zwischen den Schneidklingen derart festgesetzt, dass die Distanz mindestens größer als die horizontale Länge des größten undurchtrennbaren Abschnitts ist. Die Distanz zwischen den Schneidklingen ist jedoch auf eine Größe mindestens kleiner als die kleinste Distanz zwischen zwei angrenzenden undurchtrennbaren Abschnitten begrenzt.

Wenn die Distanz zwischen den Schneidklingen wie vorstehend erläutert gewählt wird, wird damit garantiert, dass das Schleppsonar durch entweder die erste Schneidklinge oder die zweite Schneidklinge erfolgreich gekappt wird.

In einer anderen bevorzugten Ausführung der Erfindung sind die Signalempfangseinheiten mit geringeren Abständen zueinander beabstandet als die Kupplungselemente. Dadurch ist die horizontale Distanz zwischen zwei angrenzenden Signalempfangseinheiten mindestens größer als die Länge einer Signalempfangseinheit.

In einer anderen bevorzugten Ausführung der Erfindung wird das Schleppsonar mittels einer Führungseinrichtung durch die Schneidvorrichtung geleitet, bei der es sich vorzugsweise um ein Führungsrohr handelt, und welches ein Verbiegen des Schleppsonars verhindert. Wenn das Schleppsonar vollständig in das Wasser eingesetzt ist, kann sich das Kabel, mit dem das Schleppsonar mit dem Schiff verbunden ist und das zur Versorgung mit Energie und Daten dient, im Führungsrohr befinden. Darüber hinaus kann das Führungsrohr Teile des Kabels und Teile des Schleppsonars enthalten. In diesem Fall kann das Zuleitungskabel auch mit einer oder mehreren der Schneidklingen gekappt werden. Sicherlich kann die Führungseinrichtung eine beliebige Form aufweisen und ist nicht auf die Form eines Rohrs beschränkt.

In einer anderen bevorzugten Ausführung der Erfindung wird der Druck in der Schneidvorrichtung mittels einer oder mehrerer Druckwaagen eingestellt. Dies wird bevorzugt, da durch die Positionierung der Schneidvorrichtung außerhalb des U-Boot-Hüllkörpers der Druck innerhalb und außerhalb des Gehäuses differiert.

In einer anderen bevorzugten Ausführung der Erfindung wird die hydraulische Versorgung durch die Versorgungseinheit des Schiffs bereitgestellt - wobei die Schneidvorrichtung über einen Anschluss damit verbunden sein kann - und/oder die Schneidvorrichtung umfasst eine eigene Versorgungseinheit. Zum Beispiel kann eine dieser Möglichkeiten auch als Sicherungs- oder Notfallsystem genutzt werden.

In einer anderen bevorzugten Ausführung der Erfindung umfasst die Schneidvorrichtung einen oder mehrere Scherstifte, um vor Verstellung der Schneidklingen zu schützen. Falls die Schneidvorrichtung von der Versorgungseinheit des Schiffs abhängig ist, können hydraulische Leckströme auftreten. Durch diese Leckströme kann die Schneidklinge versehentlich aktiviert werden, was unerwünscht ist. In diesem Fall ist es bevorzugt, dass die Schneideinheiten Scherstifte umfassen, welche die Schneidklingen in einer vorbestimmten Position halten, bis das entsprechende Schneidgerät aktiviert wird und der Scherstift zerbricht. Die Scherstifte sind vorzugsweise aus korrosionsbeständigem Material gefertigt und werden in einer Mutter angebracht, was es dem Nutzer ermöglicht, einen deformierten Scherstift herauszuziehen, ohne die gesamte Konstruktion zu demontieren.

In einer anderen bevorzugten Ausführung der Erfindung sind die Hydraulikzylinder derart konfiguriert, dass sie die Schneidklingen in zwei Richtungen bewegen können, um Testläufe durchzuführen, und/oder zum Entlüften der Hydraulikzylinder.

In einer anderen bevorzugten Ausführung der Erfindung aktiviert die Bedieneinheit die Hydraulikzylinder. Daher betreibt sie einen Motor, welcher den durch den Hydraulikzylinder aufgewendeten Hydraulikdruck aktiviert. Ferner steuert sie die Näherungssensoren und die Anzeige der resultierenden Daten für den Bediener. Die Bedieneinheit reguliert außerdem den Vorgang des Kappens, indem sie zuerst die erste Schneidvorrichtung aktiviert.

Falls das erste Schneidgerät das Schleppsonar aufgrund des Vorhandenseins eines undurchtrennbaren Abschnitts nicht erfolgreich gekappt hat, wird mithilfe mehrerer Ventile das zweite Schneidgerät aktiviert.

In einer anderen bevorzugten Ausführung der Erfindung umfasst die Schneidvorrichtung zwei Schneideinheiten, von denen jede ein Gehäuse, ein Schneidgerät - konfiguriert als Schneidklinge -, eine Druckwaage, einen oder mehrere Näherungssensoren, einen oder mehrere Scherstifte und einen Hydraulikzylinder umfasst. Als Alternative können die Komponenten der beiden Schneideinheiten (d. h. zwei Schneidgeräte, zwei Druckwaagen, einen oder mehrere Näherungssensoren, zwei oder mehrere Scherstifte und zwei Hydraulikzylinder) in nur einer Schneideinheit mit einem einzelnen Gehäuse angeordnet sein.

Weitere vorteilhafte Entwicklungen sind in den Unteransprüchen definiert. Diese und andere Aspekte der Erfindung ergeben sich eindeutig aus und werden erläutert unter Bezugnahme auf die im Folgenden unter Bezugnahme auf die beiliegenden Zeichnungen beschriebenen Ausführungsformen, in welchen:
Fig. 1: ein Schema darstellt, das die Gestaltung eines Schleppsonars zeigt;
Fig. 2: eine Ansicht der Schneidvorrichtung gemäß einer Ausführungsform der vorliegenden Erfindung darstellt;
Fig. 3: eine Explosionsansicht der in Fig. 2 gezeigten Schneidvorrichtung darstellt;
Fig. 4: eine Ansicht der Schneidvorrichtung mit den zwei Schneideinheiten gemäß einer anderen Ausführungsform der vorliegenden Erfindung darstellt;
Fig. 5: eine Seitenansicht einer der in Fig. 4 gezeigten Schneideinheiten darstellt;
Fig. 6: einen Schaltplan der Bedieneinheit darstellt.

In der folgenden Beschreibung vorteilhafter Ausführungsformen werden gleichartige Bezugsnummern für gleichartige Merkmale verwendet.

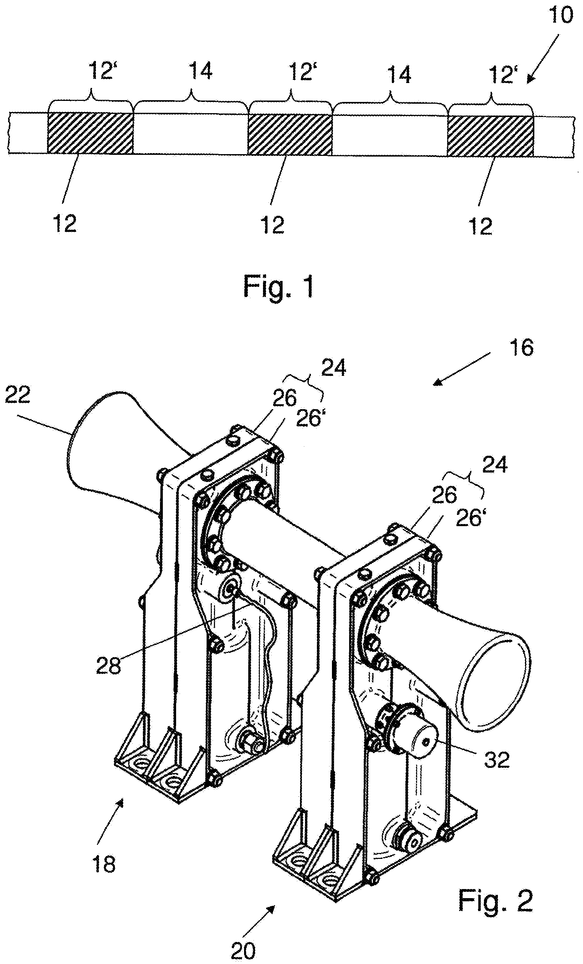

Fig. 1 zeigt ein Schema eines Abschnitts eines Schleppsonars 10 mit undurchtrennbaren Abschnitten 12, die eine horizontale Länge 12' aufweisen und mit einer Distanz 14 voneinander beabstandet sind, welche vorzugsweise mindestens größer als die horizontale Länge 12' eines undurchtrennbaren Abschnitts 12 ist.

Fig. 2 zeigt eine Schneidvorrichtung 16 in einer bevorzugten Ausführungsform der Erfindung, umfassend zwei Schneideinheiten 18, 20, welche auf eine gleichartige Weise konstruiert sind. Die zwei Schneideinheiten 18, 20 sind mittels einer Führungseinrichtung 22 verbunden - vorzugsweise als ein Rohr ausgeführt - zur Führung des Schleppsonars 10 durch die Schneideinheiten 18, 20. Dies hilft, das Verbiegen des Schleppsonars 10 zu verhindern. In der vorliegenden Ausführungsform ist die Führungseinrichtung 22 aus Polytetrafluorethylen (Teflon) gefertigt, das über sehr gute Gleiteigenschaften verfügt und somit hilft, das Schleppsonar 10 mit geringem Reibungswiderstand einzusetzen und zurückzuführen. Außerdem macht es die Führungseinrichtung 22 korrosionsbeständig. In einer anderen bevorzugten Ausführungsform ist nur eine Kartusche in der Führungseinrichtung 22 aus Teflon gefertigt. Die Verwendung von Teflon kann auf alle Ausführungsbeispiele angewendet werden.

Die Schneideinheiten 18, 20 weisen jeweils ein Gehäuse 24 auf, welches aus zwei Hälften 26, 26' konstruiert ist. Das Gehäuse 24 umfasst einen Näherungssensor 28 und eine Druckwaage 30.

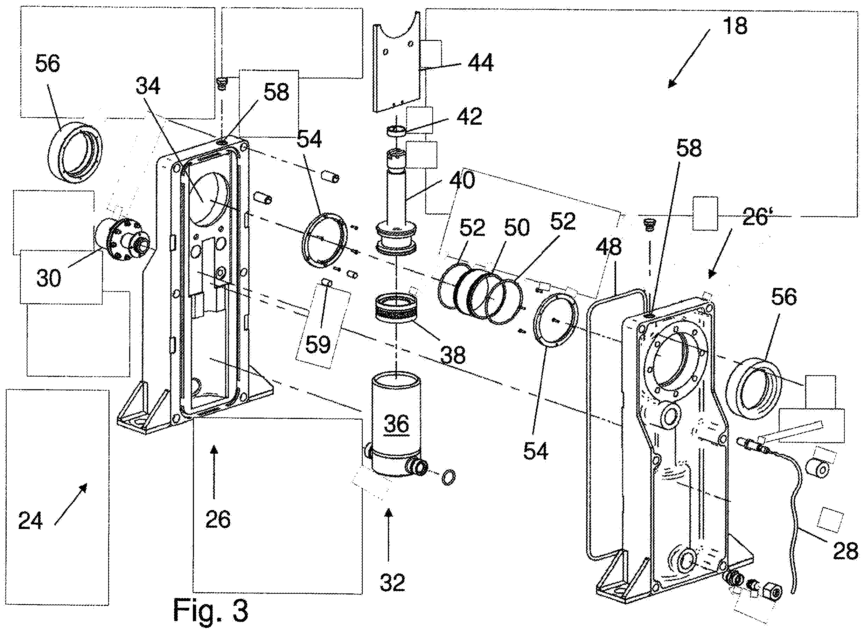

Fig. 3 zeigt die erste Schneideinheit 18 der Schneidvorrichtung 16 in einer Explosionsansicht, wobei die beiden Hälften 26, 26' des Gehäuses 24 getrennt sind. In dieser bevorzugten Ausführungsform der Erfindung weist jede Hälfte 26, 26' eine Öffnung 34 zur Aufnahme des Führungsrohrs 22 auf (siehe Fig. 2).

Ein Teil der Schneideinheit 18 enthält einen Hydraulikzylinder 32, umfassend einen Kolbenzylinder 36, eine Kolbendichtung 38 und einen Kolben 40. Ein Führungsring 42 gewährleistet die Ausrichtung des Kolbens 40 in dem Gehäuse 24. Ein Spannstift (nicht abgebildet) verbindet die Komponenten des Hydraulikzylinders 32 mit einer Schneidklinge 44.

In der vorliegenden Ausführungsform ist das Gehäuse mittels mehrerer Dichtungen, O-Ringe und/oder Versiegelungen gegen Meerwasser abgedichtet. Ein großer O-Ring 48 ist zwischen den beiden Hälften 26, 26' angeordnet und dichtet einen Innenteil mit Elektronik/- Mechanik ab. Eine Schneidrohrdichtung 50 ist direkt oberhalb der Schneidklinge 44 in der Öffnung 34 angeordnet. Mehrere weitere O-Ringe 52 und zwei Schneideringklingen 54 sind auf beiden Seiten neben der Schneidrohrdichtung 50 angebracht. Wenn die Schneideinheit 18 aktiviert wird, schiebt der Hydraulikzylinder 32 die Schneidklinge 44 mit dem Kolben 40 in die Richtung des Führungsrohrs 22. Wenn die Schneidklinge 44 durch die Schneidrohrdichtung 50 in das Führungsrohr 22 verschoben wird, zerstört sie die Schneidrohrdichtung 50. In einen Hohlraum oberhalb der Öffnung 34 im oberen Bereich der Schneideinheit 18 kann die Schneidklinge 44 aufgenommen werden, wo sie ihre Endposition erreicht, um zu garantieren, dass das Schleppsonar 10 vollständig gekappt ist. An den Außenabschnitten der Öffnung 34 befestigte Schneideinsätze 56 halten alle Elemente 50, 52, 54 zusammen. In einer anderen Ausführungsform der Erfindung sind die Schneideringklingen 54 scharf, was die Schneidklinge 44 beim Kappen des Schleppsonars 10 unterstützt, indem zwei scharfe Kanten gegeneinander geschert werden. In einer weiteren Ausführungsform ist das Führungsrohr 22 an dem Gehäuse 24 der Schneideinheit 18 mittels einer Flanschdichtung angebracht.

Die Schneidvorrichtung 16 kann entweder mit der hydraulischen Versorgungseinheit eines Schiffs verbunden werden, oder sie kann ihre eigene Versorgungseinheit aufweisen. Im ersten Fall können sich durch den aus der Versorgungseinheit des Schiffs entstehenden Hydraulikdruck Leckströme bilden. Dadurch kann die Schneidklinge 44 versehentlich aktiviert werden. Daher werden Scherstifte 59 verwendet, um unerwünschte Bewegungen der Schneidklinge 44 zu verhindern.

In der vorliegenden Ausführungsform ist der Innenteil der Schneideinheit 18, 20 mit Öl befüllt, um Korrosion an der Schneidklinge 44 zu verhindern. Daher sind ein oder mehrere Öleinfüllpunkte 58 auf der Oberseite der Schneideinheit 18 angebracht, über die Öl in das Gehäuse 24 eingefüllt werden kann.

Der Näherungssensor 28 kann die Position der Schneidklinge 44 ermitteln, wobei der Näherungssensor 28 an mehreren Stellen angeordnet sein kann. Zum Beispiel kann er derart positioniert sein, dass er die Position unmittelbar vor dem Kappen erfasst, wenn die Schneidklinge 44 schon fast durch die Schneidrohrdichtung 50 verschoben wird. In einem anderen Beispiel könnte er derart angebracht werden, dass er ermittelt, wann die Schneidklinge 44 in den Hohlraum oberhalb der Öffnung 36 gelangt, was bedeutet, dass der Schneidvorgang erfolgreich war. In jedem Fall sind die Informationen über die Position der Schneidklinge 44 von hohem Wert für den Bediener, um weitere Entscheidungen über den Schneidvorgang zu treffen.

Die Schneidvorrichtung 16 ist vorzugsweise außerhalb des U-Boot-Hüllkörpers angeordnet, was zu unterschiedlichen Drücken innerhalb und außerhalb der Schneideinheiten 18 führt. Zum Schutz der Komponenten der Schneidvorrichtung 16 vor den hohen Drücken der Umgebung wird der Druck innerhalb der Schneideinheiten 18 vorzugsweise mittels einer Druckwaage 30 angepasst. Beide Schneideinheiten sind auf ähnliche Weise konstruiert und enthalten die gleichen Komponenten. Eine Ausnahme ist der Näherungssensor, der bei der zweiten Schneideinheit entfallen kann, da ein erfolgreicher Schnitt der zweiten Schneideinheit nicht unbedingt gemessen werden muss.

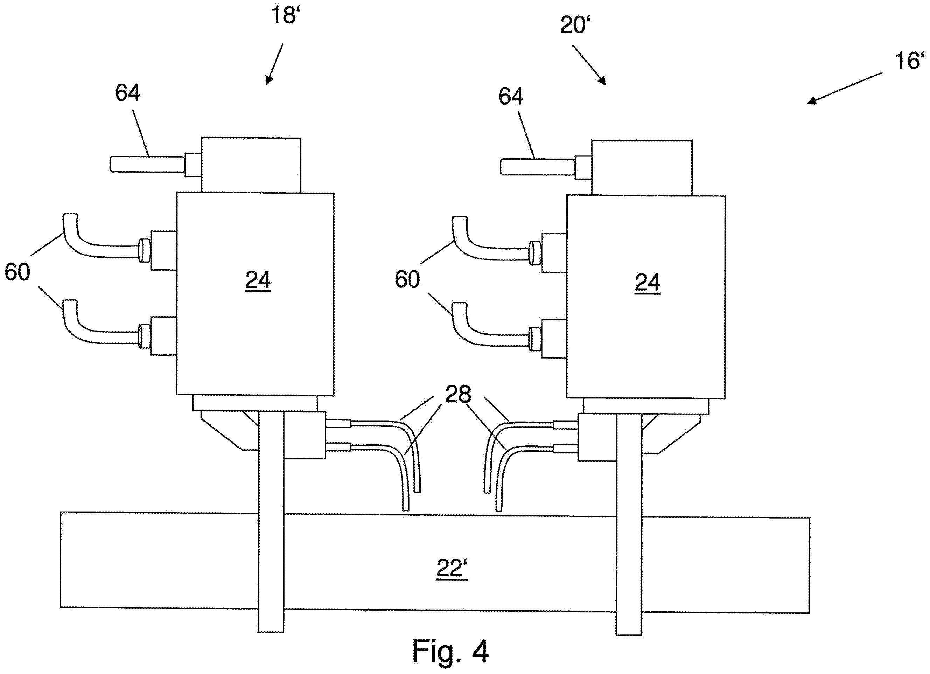

Fig. 4 stellt eine andere bevorzugte Ausführungsform der Erfindung dar, wobei eine Schneidvorrichtung 16' zwei Schneideinheiten 18', 20' umfasst. Die Führungseinrichtung 22' ist im unteren Bereich der Schneidvorrichtung 16' angebracht, was sich von den Ausführungsformen in Fig. 2 und 3 unterscheidet, in denen die Führungseinrichtung 22' im oberen Bereich der Schneidvorrichtung 16 angeordnet ist. Die Führungseinrichtung kann wieder aus Teflon gefertigt sein oder eine Kartusche aus Teflon enthalten.

In der vorliegenden Ausführungsform sind zwei Hydraulikzylinder 32' in dem Gehäuse 24 jeweils über zwei hydraulische Verbindungen 60 mit einer Bedieneinheit 62 verbunden. Die Hydraulikzylinder 32' sind derart konfiguriert, dass sie die Schneidklingen 44 in zwei Richtungen - z. B. nach oben und nach unten - aktivieren können. Dies ist vorteilhaft, da es ermöglicht, Testläufe durchzuführen und/oder den Hydraulikzylinder 32' zu entlüften. Ein elektrischer Anschluss 64, insbesondere zur Versorgung des Näherungssensors 28, ist auf der Schneideinheit 18, 20 angeordnet.

In der vorliegenden Ausführungsform umfasst jede der Schneideinheiten 18', 20' eine Schneidklinge 44, welche aus korrosionsbeständigem Material gefertigt ist. Dieses Material kann zum Beispiel Bronze sein. Eine Druckwaage 30, eine Befüllung mit Öl und mehrere Dichtungen sind daher nicht erforderlich. Wenn eine der Schneideinheiten 18', 20' aktiviert wird, wird die Schneidklinge 44 vom Hydraulikzylinder 32' nach unten gedrückt und zerstört zumindest Teile des Führungsrohrs 22'. Die Schneidklinge 44 weist vorzugsweise eine Breite von 10 mm auf, was bedeutet, dass sie abgestumpft ist. Dies ist vorteilhaft, da es keinerlei Wartung erfordert. Darüber hinaus ist das Material der Schneidklinge 44 vorzugsweise nichtmagnetisch.

Jede Schneideinheit 18', 20' umfasst zwei Näherungssensoren 28 und einen elektrischen Anschluss 64. Somit können zwei verschiedene Positionen der Schneidklinge 44 ermittelt werden, wodurch genaue Informationen über den Fortgang des Schneidvorgangs bereitgestellt werden. Es ist ebenfalls möglich, das System derart zu konfigurieren, dass es die zweite Schneideinheit 20' aktiviert, wenn der Näherungssensor der ersten Schneideinheit 18' ermittelt, dass die erste Schneidklinge 44 an einem undurchtrennbaren Abschnitt 12 des Schleppsonars 10 stecken geblieben ist.

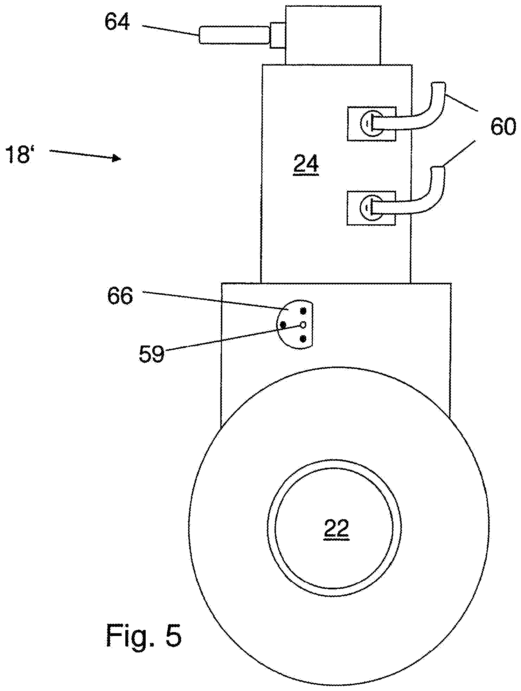

Fig. 5 zeigt eine Seitenansicht der Schneideinheit 18'. Ein Scherstift 59' hält die Schneidklinge 44 (siehe Fig. 3) in ihrer Position, selbst wenn Leckströme auftreten. Diese Leckströme könnten die Schneidklinge 44 verschieben, welche in das Führungsrohr 22' drücken, und somit den Einsatz des Schleppsonars 10 verhindern würden. Wenn die Schneideinheit 18' aktiviert und Druck auf den Scherstift 59 ausgeübt wird, verformt sich dieser zuerst und bricht anschließend, wenn ein bestimmter Druckwert erreicht wird. Der Scherstift 59 ist korrosionsbeständig und in eine Mutter 66 eingesetzt. Dies ermöglicht es einem Bediener, die Mutter 66 mit dem Scherstift 59 herauszuziehen, selbst wenn er deformiert ist, und zwar ohne die gesamte Schneidvorrichtung 16' zerlegen zu müssen. Wieder sind beide Schneideinheiten 18', 20' auf eine gleichartige Weise konstruiert und enthalten die gleichen Komponenten.

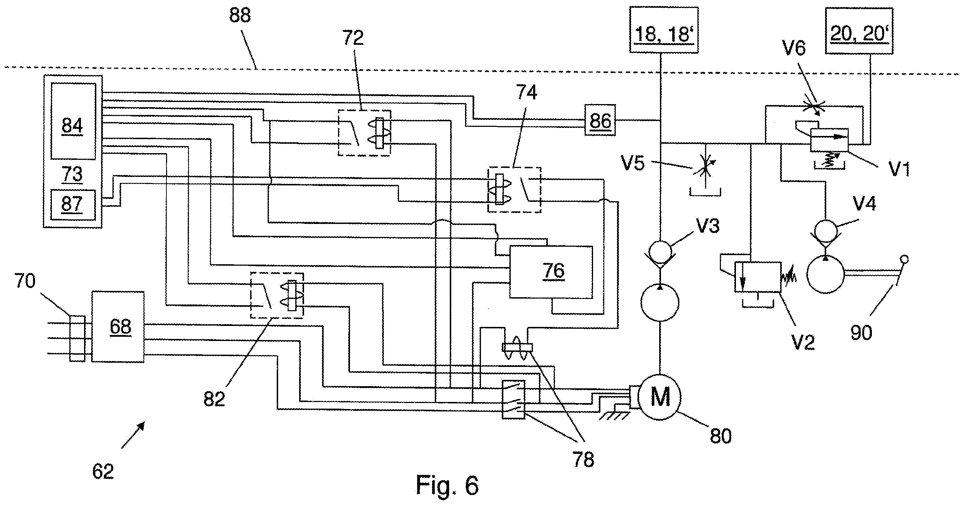

Fig. 6 zeigt einen Schaltplan der Bedieneinheit 62, mit dem der gesamte Schneidvorgang gesteuert wird. Die Bedieneinheit 62 ist daher mit den Schneidgeräten 44 und den Näherungssensoren 28 verbunden und kann von einem Bediener betrieben werden. Die Energieverwaltungseinheit 68 der Bedieneinheit 62 ist mit der Versorgungseinheit des Schiffs über einen Anschluss 70 oder mit einer zur Schneidvorrichtung 10 gehörigen eigenen Versorgungseinheit verbunden. In diesem Schaltkreis werden mehrere Relais zur Steuerung des Schneidvorgangs verwendet. Es ist natürlich auch möglich, dieselben Prozesse mit Mikrocontrollern durchzuführen.

Ein erstes Relais 72 erfasst kontinuierlich, ob von einer Versorgungseinheit Energie bereitgestellt wird. Ein Signal von einem Schneidknopf, welcher in die Betriebsverwaltungseinheit 73 aufgenommen werden kann, schließt ein zweites Relais 74 und löst das Zeitgebermodul 76 aus, welches ein drittes Relais 78 schließt. Dann wird dem Motor 80 - bei dem es sich vorzugsweise um einen Hydraulikaggregatmotor handelt - 30 Sekunden lang Energie bereitgestellt. Durch das Schließen des dritten Relais 78 wird ein viertes Relais 82 ebenfalls geschlossen und ein PLC (Programmable Logic Controller) 84 in der Betriebsverwaltungseinheit 73 erhält ein Signal, dass der Motor aktiviert wurde. Alternativ kann der Betrieb des PLC 84 auch nicht digital erfolgen.

Der Motor 80 treibt eine Pumpe an, welche Druck in dem System aufbaut. In der Folge wird die - im Inneren des U-Boots befindliche - erste Schneideinheit 18, 18' aktiviert. Die erste Schneidklinge 44 versucht dann, das Schleppsonar 10 zu kappen. Ein regelbarer analoger Drucksensor 86 sendet entsprechend dem Druck im System ein Signal an den PLC 84. Der Drucksensor 86 ermöglicht es außerdem dem Bediener zu beurteilen, ob in den außerhalb befindlichen Elementen der Hydraulik ein Leck besteht, da dies einen Druckanstieg anzeigen würde, wenn kein Schneidesignal gesendet wurde. Das Signal kann an der Anzeige 87 angezeigt werden.

Die erste Schneideinheit 18, 18' benötigt eine vorbestimmte Zeit, um den Vorgang abzuschließen. Nach Ablauf dieser Zeit und erfolgreicher Ausführung des Schnitts sendet der Näherungssensor 28 der ersten Schneideinheit 18, 18' ein Signal über den elektrischen Anschluss 64, wodurch das zweite Relais 74 und das vierte Relais 82 geöffnet werden, wobei der Motor 80 von der Stromversorgung getrennt wird. Das Signal vom Näherungssensor 28 wird einem Bediener außerdem an der Anzeige 87 verfügbar gemacht.

Falls die erste Schneideinheit 18, 18' das Schleppsonar 10 nicht erfolgreich gekappt hat, da mit der ersten Schneidklinge 44 ein undurchtrennbarer Abschnitt 12 getroffen wurde, wird der Näherungssensor 28 der ersten Schneideinheit 18, 18' nicht das Abschalten des Motors 80 auslösen, und der Druck im System wird weiter ansteigen. Wenn der Druck einen ersten vorgegebenen Wert erreicht, lässt das Ventil V1 - bei dem es sich vorzugsweise um ein direkt wirkendes Zuschaltventil handelt - den Druck durch die zweite Schneideinheit 20, 20' strömen. Die zweite Schneideinheit 20, 20' wird anschließend aktiviert und kappt das Schleppsonar 10. Die erste Schneideinheit 18, 18' und die zweite Schneideinheit 20, 20' sind außerhalb des Druckkörpers 88 angeordnet, während die Bedieneinheit 62 im Inneren angebracht ist.

Nachdem der Einsatz der zweiten Schneideinheit 20, 20' abgeschlossen ist, beginnt der Druck im System wieder anzusteigen. Wenn der Druck einen zweiten vorgegebenen Wert erreicht, der höher als der erste vorgegebene Wert ist, beginnt Ventil V2 - bei dem es sich vorzugsweise um ein Überdruckventil handelt - zu arbeiten, um das System vor Überdruck-Überlastung zu schützen. Dadurch wird der Rückstrom in den Ölbehälter ermöglicht. Alternativ oder falls der Motor 80 nicht funktioniert - zum Beispiel bei einem Stromausfall - kann stattdessen die Handpumpe 90 verwendet werden. Anschließend werden dieselben Schritte zum Kappen des Schleppsonars 10 ausgeführt.

Die Rückschlagventile V3 und V4 verhindern den Rückstrom durch die vom Motor 80 angetriebene Pumpe bzw. die Handpumpe 90. Die Nadelventile V5 und V6 werden während der Wartung, der Einrichtung und nach dem Betrieb des Systems zur Druckentlastung im System verwendet. Eine Druckentlastung des Systems erfolgt nach dem Betrieb aus Gründen der Sicherheit. Der Systemdruck kehrt dadurch auf Null (oder nahe Null) zurück. V6 wird während der Einrichtung des Systems verwendet, wobei V1 umgangen werden kann und die Rohre der zweiten Schneideinheit 20 vorbereitet werden, ohne dass sie den ersten vorgegebenen Druckwert bei V1 erreichen müssen. Abschließend wird die zweite Schneideinheit 20, 20' aktiviert, wenn die erste Schneideinheit 18, 18' beim Kappen des Schleppsonars 10 durch Auftreffen auf einen undurchtrennbaren Abschnitt 12 nicht erfolgreich war. Die erste Schneideinheit 18, 18' befindet sich dabei auf der Seite nach innen zum U-Boot hin, näher an einer Kabeltrommel, die das Schleppsonar 10 hält, während die zweite Schneideinheit 20, 20' in Richtung nach außen, weiter entfernt von der Kabeltrommel angeordnet ist. Eine vorbestimmte Reihenfolge des Kappens ist daher vorteilhaft, wobei die innen befindliche Schneideinheit 18, 18' zuerst schneiden muss. Falls die zweite Schneideinheit 20, 20' zuerst schneiden und auf einen undurchtrennbaren Abschnitt 12 treffen würde, könnte die zweite Schneidklinge am Schleppsonar 10 stecken bleiben. Selbst wenn die erste Schneideinheit 18, 18' danach erfolgreich gekappt hätte, würde das Schleppsonar weiterhin in der Schneidvorrichtung 16, 16' und somit in dem U-Boot stecken bleiben.

## Patentansprüche

1. System, umfassend eine Schneidvorrichtung (16, 16') zum Kappen eines Schleppsonars (10), wobei die Schneidvorrichtung (16, 16') ein erstes Schneidgerät (44) zum Kappen des Schleppsonars (10) umfasst,
wobei
(a) die Schneidvorrichtung (16, 16') ein zweites Schneidgerät zum Kappen des Schleppsonars (10) umfasst,
(b) wobei das zweite Schneidgerät in einer vorbestimmten Distanz (14) von dem ersten Schneidgerät (44) beabstandet angeordnet ist;
**dadurch gekennzeichnet, dass**
die Schneidvorrichtung (16, 16') eine oder mehrere Sensoreinrichtungen (28) zur Erlangung von Informationen über die Position von mindestens einer der Schneidklingen (44) enthält, wobei die Sensoreinrichtungen (28) einen Anschluss zur Verbindung mit einer Bedieneinheit (62) der Schneidvorrichtung (16, 16') zur Bereitstellung der Informationen für die Bedieneinheit (62) umfassen, wobei die Bedieneinheit (62) einen Anschluss zur Verbindung mit den Schneidgeräten (44) zur Aktivierung der Schneidgeräte (44) auf der Basis der Informationen der Sensoreinrichtungen (28) oder durch Steuerung eines Bedieners umfasst.

2. System nach Anspruch 1,
**dadurch gekennzeichnet, dass**
es sich bei den Schneidgeräten (44) um eine oder mehrere erste Schneidklingen (44) und um eine oder mehrere zweite Schneidklingen handelt.

3. System nach Anspruch 2,
**dadurch gekennzeichnet, dass**
das Material von mindestens einer der Schneidklingen (44) nichtmagnetisch ist und/oder das Material von mindestens einer der Schneidklingen (44) korrosionsbeständig ist und/oder die Schneidvorrichtung (16, 16') ein abgedichtetes Gehäuse (24) umfasst, das gegen Meerwasser abgedichtet ist, und das derart konzipiert ist, dass eine, mehrere oder alle Schneidklingen (44) in eine Flüssigkeit eingebettet sind, um Korrosion zu verhindern.

4. System nach den Ansprüchen 2 bis 3,
**dadurch gekennzeichnet, dass**
die Schneidvorrichtung (16, 16') mindestens einen Hydraulikzylinder (30, 30') zur Aktivierung der Schneidklingen (44) umfasst.

5. System nach einem der vorstehenden Ansprüche,
**dadurch gekennzeichnet, dass**
das System ein Schleppsonar (10) für den Empfang von Unterwassersignalen umfasst, wobei das Schleppsonar (10) einen oder mehrere undurchtrennbare Abschnitte umfasst.

6. System nach Anspruch 2 bis 5,
**dadurch gekennzeichnet, dass**
die Distanz zwischen dem ersten Schneidgerät (44) und dem zweiten Schneidgerät derart definiert ist, dass höchstens eines der Schneidgeräte (44) auf einen undurchtrennbaren Abschnitt (12) trifft, wenn die Schneidgeräte (44) aktiviert werden.

7. Schneidverfahren zum Kappen eines Schleppsonars (10), wobei ein erstes Schneidgerät (44) einer Schneidvorrichtung (16, 16') zum Kappen des Schleppsonars (10) aktiviert wird,
**dadurch gekennzeichnet, dass**
ein zweites Schneidgerät der Schneidvorrichtung (16, 16') eine vorgegebene Distanz vom ersten Schneidgerät (44) entfernt angeordnet ist, wobei das zweite Schneidgerät aktiviert wird, wenn festgestellt wurde, dass das erste Schneidgerät (44) das Schleppsonar (10) nicht erfolgreich gekappt hat.

8. Schneidverfahren nach Anspruch 7,
**dadurch gekennzeichnet, dass**
ein zweites Schneidgerät, bestehend aus einer oder mehreren zweiten Schneidklingen, aktiviert wird, falls das erste Schneidgerät (44), bestehend aus einer oder mehreren ersten Schneidklingen (44), das Schleppsonar (10) nicht erfolgreich gekappt hat.

9. Schneidverfahren nach Anspruch 8,
**dadurch gekennzeichnet, dass**
das Material von mindestens einer der Schneidklingen nicht durch ein oder mehrere Magnetfelder beeinträchtigt werden kann, und dass das Material von mindestens einer der Schneidklingen (44) Korrosion widersteht und/oder mindestens ein abgedichtetes Gehäuse (24) Korrosion der Schneidklingen (44) durch Einbetten der Schneidklingen (44) in eine Flüssigkeit verhindert.

10. Schneidverfahren nach Anspruch 7 bis 9,
**dadurch gekennzeichnet, dass**
die Position von mindestens einer der Schneidklingen (44) durch eine oder mehrere Sensoreinrichtungen (28) der Schneidvorrichtung (16, 16') erfasst wird, wobei die Sensoreinrichtungen (28) die Informationen einer Bedieneinheit (62) der Schneidvorrichtung (16, 16') bereitstellen, wobei die Bedieneinheit (62) die Schneidklingen (44) auf der Basis der Informationen oder durch Steuerung eines Bedieners aktiviert.

11. Schneidverfahren nach Anspruch 8 bis 10,
**dadurch gekennzeichnet, dass**
mindestens eine der Schneidklingen (44) durch einen Hydraulikzylinder (30, 30') aktiviert wird.

12. Schneidverfahren nach Anspruch 7 bis 11,
**dadurch gekennzeichnet, dass**
das Schleppsonar (10) durch undurchtrennbare Abschnitte (12) unterteilt wird.

13. Schneidverfahren nach Anspruch 8 bis 12,
**dadurch gekennzeichnet, dass,**
falls das erste Schneidgerät (44) das Schleppsonar (10) durch Auftreffen auf einen undurchtrennbaren Abschnitt (12) nicht erfolgreich gekappt hat, das zweite Schneidgerät das Schleppsonar (10) in einer solchen Distanz (14) vom ersten Schneidgerät (44) schneidet, dass es nicht auf einen undurchtrennbaren Abschnitt (12) trifft und somit das Schleppsonar (10) erfolgreich kappt.

## Claims

1. System, comprising a cutting device (16, 16') for cutting a towed array sonar (10), wherein the cutting device (16, 16') comprises a first cutter (44) for cutting the towed array sonar (10),
wherein
(a) the cutting device (16, 16') comprises a second cutter for cutting the towed array sonar (10),
(b) wherein the second cutter is arranged spaced apart at a predetermined distance (14) from the first cutter (44) ;
**characterized in that**
the cutting device (16, 16') contains one or more sensor devices (28) for obtaining information about the position of at least one of the cutting blades (44), wherein the sensor devices (28) comprise a connection for connecting to an operating unit (62) of the cutting device (16, 16') for providing the information for the operating unit (62), wherein the operating unit (62) comprises a connection to the cutters (44) for activating the cutters (44) on the basis of the information of the sensor devices (28) or as a result of control by an operator.

2. System according to Claim 1,
**characterized in that**
the cutters (44) are one or more first cutting blades (44) and one or more second cutting blades.

3. System according to Claim 2,
**characterized in that**
the material of at least one of the cutting blades (44) is non-magnetic and/or the material of at least one of the cutting blades (44) is corrosion-resistant and/or the cutting device (16, 16') comprises a sealed housing (24) which is sealed against seawater and which is designed in such a way that one, several or all cutting blades (44) are embedded in a liquid to prevent corrosion.

4. System according to Claims 2 to 3,
**characterized in that**
the cutting device (16, 16') comprises at least one hydraulic cylinder (30, 30') for activating the cutting blades (44).

5. System according to any one of the above claims,
**characterized in that**
the system includes a towed array sonar (10) for the reception of underwater signals, wherein the towed array sonar (10) comprises one or more impenetrable sections.

6. System according to Claims 2 to 5,
**characterized in that**
the distance between the first cutter (44) and the second cutter is defined in such a way that no more than one of the cutters (44) hits an impenetrable section (12) when the cutters (44) are activated.

7. Cutting method for cutting a towed array sonar (10), wherein a first cutter (44) of a cutting device (16, 16') is activated for cutting the towed array sonar (10),
**characterized in that**
a second cutter of the cutting device (16, 16') is arranged at a predetermined distance from the first cutter (44), wherein the second cutter is activated when it has been determined that the first cutter (44) has not successfully cut the towed array sonar (10).

8. Cutting method according to Claim 7,
**characterized in that**
a second cutter, consisting of one or more second cutting blades, is activated if the first cutter (44), consisting of one or more first cutting blades (44), has not successfully cut the towed array sonar (10).

9. Cutting method according to Claim 8,
**characterized in that**
the material of at least one of the cutting blades cannot be affected by one or more magnetic fields, and that the material of at least one of the cutting blades (44) resists corrosion and/or at least one sealed housing (24) prevents corrosion of the cutting blades (44) as a result of embedding the cutting blades (44) in a liquid.

10. Cutting method according to Claims 7 to 9,
**characterized in that**
the position of at least one of the cutting blades (44) is detected by one or more sensor devices (28) of the cutting device (16, 16'), wherein the sensor devices (28) provide the information to an operating unit (62) of the cutting equipment (16, 16'), wherein the operating unit (62) activates the cutting blades (44) on the basis of the information or as a result of control by an operator.

11. Cutting method according to Claims 8 to 10,
**characterized in that**
at least one of the cutting blades (44) is activated by a hydraulic cylinder (30, 30').

12. Cutting method according to Claims 7 to 11,
**characterized in that**
the towed array sonar (10) is subdivided by impenetrable sections (12).

13. Cutting method according to Claims 8 to 12,
**characterized in that,**
if the first cutter (44) has not successfully cut the towed array sonar (10) as a result of hitting an impenetrable section (12), the second cutter cuts the towed array sonar (10) at such a distance (14) from the first cutter (44) that it does not hit an impenetrable section (12) and thus successfully cuts the towed array sonar (10).

## Revendications

1. Système, comprenant un dispositif de coupe (16, 16') permettant de couper un sonar remorqué (10), le dispositif de coupe (16, 16') comprenant un premier outil de coupe (44) pour couper le sonar remorqué (10),
dans lequel
(a) le dispositif de coupe (16, 16') comprend un deuxième outil de coupe pour couper le sonar remorqué (10),
(b) le deuxième outil de coupe étant disposé en étant espacé d'une distance prédéterminée (14) du premier outil de coupe (44) ;
**caractérisé en ce que**
le dispositif de coupe (16, 16') comprend un ou plusieurs dispositifs de détection (28) pour obtenir des informations concernant la position d'au moins l'une des lames de coupe (44), les dispositifs de détection (28) comprenant un connecteur pour une connexion à une unité d'actionnement (62) du dispositif de coupe (16, 16') afin de fournir les informations pour l'unité d'actionnement (62), l'unité d'actionnement (62) comprenant un connecteur pour une connexion aux outils de coupe (44) afin d'activer les outils de coupe (44) sur la base des informations des dispositifs de détection (28) ou par une commande d'un utilisateur.

2. Système selon la revendication 1, **caractérisé en ce que** les outils de coupe (44) correspondent à une ou plusieurs premières lames de coupe (44) et à une ou plusieurs deuxièmes lames de coupe.

3. Système selon la revendication 2, **caractérisé en ce que** le matériau d'au moins l'une des lames de coupe (44) n'est pas magnétique et/ou le matériau d'au moins l'une des lames de coupe (44) est résistant à la corrosion et/ou le dispositif de coupe (16, 16') comprend un boîtier étanche (24) qui est étanche à l'eau de mer et qui est conçu de telle sorte qu'une, plusieurs ou toutes les lames de coupe (44) sont immergées dans un liquide pour empêcher la corrosion.

4. Système selon l'une quelconque des revendications 2 et 3, **caractérisé en ce que** le dispositif de coupe (16, 16') comprend au moins un cylindre hydraulique (30, 30') pour activer les lames de coupe (44).

5. Système selon l'une quelconque des revendications précédentes, **caractérisé en ce que** le système comprend un sonar remorqué (10) pour recevoir des signaux sous-marins, le sonar remorqué (10) comprenant une ou plusieurs parties ne pouvant pas être sectionnées.

6. Système selon les revendications 2 à 5, **caractérisé en ce que** la distance entre le premier outil de coupe (44) et le deuxième outil de coupe est définie de telle sorte qu'au plus l'un des outils de coupe (44) tombe sur une partie ne pouvant pas être sectionnée (12) lorsque les outils de coupe (44) sont activés.

7. Procédé de découpe permettant de couper un sonar remorqué (10), dans lequel un premier outil de coupe (44) d'un dispositif de coupe (16, 16') permettant de couper le sonar remorqué (10) est activé, **caractérisé en ce qu'**un deuxième outil de coupe du dispositif de coupe (16, 16') est disposé en étant éloigné d'une distance prédéfinie du premier outil de coupe (44), le deuxième outil de coupe étant activé lorsqu'il a été constaté que le premier outil de coupe (44) n'a pas réussi à couper le sonar remorqué (10).

8. Procédé de coupe selon la revendication 7, **caractérisé en ce qu'**un deuxième outil de coupe, composé d'une ou de plusieurs deuxièmes lames de coupe, est activé si le premier outil de coupe (44), composé d'une ou de plusieurs premières lames de coupe (44), n'a pas réussi à couper le sonar remorqué (10).

9. Procédé de coupe selon la revendication 8, **caractérisé en ce que** le matériau d'au moins l'une des lames de coupe ne peut pas être affecté par un ou plusieurs champs magnétiques, et **en ce que** le matériau d'au moins l'une des lames de coupe (44) résiste à la corrosion, et/ou au moins un boîtier étanche (24) empêche la corrosion des lames de coupe (44) en immergeant les lames de coupe (44) dans un liquide.

10. Procédé de coupe selon les revendications 7 à 9, **caractérisé en ce que** la position d'au moins l'une des lames de coupe (44) est détectée par un ou plusieurs dispositifs de détection (28) du dispositif de coupe (16, 16'), les dispositifs de détection (28) fournissant les informations à une unité d'actionnement (62) du dispositif de coupe (16, 16'), l'unité d'actionnement (62) activant les lames de coupe (44) sur la base des informations ou par une commande d'un utilisateur.

11. Procédé de coupe selon les revendications 8 à 10, **caractérisé en ce qu'**au moins l'une des lames de coupe (44) est activée par un cylindre hydraulique (30, 30').

12. Procédé de coupe selon les revendications 7 à 11, **caractérisé en ce que** le sonar remorqué (10) est divisé en parties ne pouvant pas être sectionnées (12).

13. Procédé de coupe selon les revendications 8 à 12, **caractérisé en ce que**, si le premier outil de coupe (44) ne réussit pas à couper le sonar remorqué (10) parce qu'il tombe sur une partie ne pouvant pas être sectionnée (12), le deuxième outil de coupe coupe le sonar remorqué (10) à une distance (14) du premier outil de coupe (44) telle qu'il ne tombe pas sur une partie ne pouvant pas être sectionnée (12) et réussit donc à couper le sonar remorqué (10).
